Europäisches Patentamt

European Patent Office

Office européen des brevets

(11) Veröffentlichungsnummer: **0 156 295**
**B1**

(12) **EUROPÄISCHE PATENTSCHRIFT**

(45) Veröffentlichungstag der Patentschrift: **16.01.91**

(51) Int. Cl.⁵: **C 04 B 41/48**

(21) Anmeldenummer: **85103206.0**

(22) Anmeldetag: **19.03.85**

(54) Verfahren zur Elastomerbeschichtung von Mineralwerkstoffen und nach diesem Verfahren hergestelltes Produkt.

(30) Priorität: **28.03.84 DE 3411451**
**26.07.84 DE 3427487**

(43) Veröffentlichungstag der Anmeldung:
**02.10.85 Patentblatt 85/40**

(45) Bekanntmachung des Hinweises auf die Patenterteilung:
**16.01.91 Patentblatt 91/03**

(84) Benannte Vertragsstaaten:
**AT BE CH DE FR GB IT LI SE**

(56) Entgegenhaltungen:
**EP-A-0 009 053**
**DE-A-2 927 884**
**DE-B-1 238 199**
**GB-A- 393 115**
**GB-A- 692 777**
**GB-A-2 045 109**

**Die Akte enthält technische Angaben, die nach dem Eingang der Anmeldung eingereicht wurden und die nicht in dieser Patentschrift enthalten sind.**

(73) Patentinhaber: **Hering, Reinhard Friedrich**
**Via Albaredo 34**
**CH-6645 Brione S.M. (CH)**

(72) Erfinder: **Hering, Reinhard Friedrich**
**Via Albaredo 34**
**CH-6645 Brione S.M. (CH)**

(74) Vertreter: **Kraus, Walter, Dr. et al**
**Patentanwälte Kraus, Weisert & Partner**
**Thomas-Wimmer-Ring 15**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft ein Verfahren zur Elastomerbeschichtung von vorgefertigten Werkstoffen aus mineralischen und/oder nichtmineralischen Substanzen, Zusätzen sowie gegebenenfalls Zuschlagstoffen und/oder Armierungen und einen mittels dieses Verfahrens beschichteten Werkstoff.

Aus der DE-B-1 238 199 ist eine Folie aus Isobutylgummi zum Beschichten und Auskleiden von Behältern bekannt. Diese Folie besteht aus zwei miteinander verbundenen Schichten, von denen eine mit der Wand des auszukleidenden Behälters durch Verkleben mittels eines Spezialklebers verbunden wird. Weiter ist es aus der Zeitschrift Kautschuk + Gummi, Kunststoffe, Nr. 2, 1980, Seite 95 bis 100, bekannt, Kautschuk zum Oberflächenschutz gegen Korrosion auf Behälter, Filter, Rohre, Ventile, Pumpen und dergleichen aufzubringen. Hierzu werden selbstvulkanisierende Kautschukarten verwendet, die bei niedrigen Temperaturen ohne Anwendung von Flächendruck appliziert werden, wobei alle Löcher und Unebenheiten des Trägermaterials, wie zum Beispiel einer Betonoberfläche, vor dem Aufbringen des Kautschuks geglättet und geschlossen werden.

Schließlich ist aus der GB-A-692 777 ein Verfahren zum Beschichten eines aus einer Zementmischung hergestellten Basiskörpers mit einem Hartgummibelag bekannt, bei dem zunächst ein Gummibelag mittels einer vulkanisierbaren Gummilösung auf die Oberfläche des Basiskörpers aufgebracht wird, wobei der Basiskörper und/oder der Gummibelag so ausgebildet ist, daß die Grenzfläche zwischen beiden Schwefel oder schwefelhaltige Verbindungen, zum Beispiel Sulfide, enthält. Danach wird mittels dieser schwefelreichen Zwischenschicht eine Verklebung bewirkt, indem mit Mineralkomponenten des Basiskörpers oder des Gummibelags Polysulfide gebildet werden, welche die Grenzflächen des Basiskörpers und des Hartgummibelags innig durchdringen und beide fest miteinander vereinigen.

Endlich ist aus der EP-A-0 009 053 ein Verfahren zur Herstellung von witterungsbeständigen Platten oder Formkörpern bekannt, bei dem mit Bindemitteln versetzte Holzteilchen, lignozellulosehaltige Fasern oder anderweitige aufbereitete Rohstoffe unter großer Hitze gepreßt und zugleich mit einer dabei aus- und aufvulkanisierenden Deckschicht aus heißvulkanisierenden Kautschuken oder Elastomeren versehen werden. Nach diesem Verfahren erfolgen Verdichtung und Fertigung des Grundmaterials sowie Beschichtung mit dem Elastomer in einem einzigen Arbeitsgang. Wenn jedoch der Werkstoff, wie beispielsweise Spanplatten, zementgebundene Faserplatten oder dergleichen aus irgendwelchen fertigungstechnischen oder sonstigen Gründen bereits vorher fertiggestellt, also vorgefertigt ist, kann dieses Verfahren nicht angewandt werden. Fertigungstechnische Gründe, die eine Vorfertigung notwendig machen und damit eine Anwendung des Verfahrens nach der EP-A-0 009 053 nicht gestatten, liegen bei der Vielzahl all jener Rohstoffkombinationen vor, bei denen die Materialverformung und -verfestigung nicht durch gleichzeitige äußere Einwirkung von Druck und hohen Temperaturen, sondern durch vorwiegend kalt ablaufende chemische Abbindeprozesse erfolgt. Aus diesem Grunde muß hier durch zeitliche sowie maschinelle Trennung der Werkstoffproduktion und des Beschichtungsprozesses ein gänzlich anderer Weg beschritten werden.

Solche Mineralwerkstoffe sind, eben oder verformt, zum Beispiel als Leicht- oder Porenbetonplatten, als Blähton-Isolierplatten, als Asbestzement-, Zementspan- oder Gipsplatten seit langem bekannt und vor allem wegen ihrer Unbrennbarkeit und Unverrottbarkeit als Baustoffe für Außen- und Innenwandverschalungen, Fassadenbekleidungen und Bedachungen in großen Mengen im Einsatz. Ihrer universellen Anwendbarkeit sind allerdings vor allem durch die Schwere des Materials und seine außerordentliche Bruchempfindlichkeit Grenzen gesetzt. Dem Bestreben, aus Gründen der Gewichtsersparnis die Dicke dieser zumeist plattenförmigen Werkstoffe zu verringern, steht im selben Maße gesteigerte Bruchanfälligkeit mit vermehrtem Materialausschuß und -verlust entgegen, die bisher dünne Platten in wünschenswert großen Formaten nicht erlauben und zu aufwendigen Sicherungsmaßnahmen bei der Plattenmontage und -befestigung am Bau zwingen.

Wenn diese Mineralwerkstoffe eine schützende und dekorative Oberflächenbehandlung nicht erst am Einsatzort, sondern bereits beim Hersteller erhalten sollen, werden heute, um die erforderlichen Schichtdicken zu erzielen, üblicherweise in meist mehrstufigen Applikations- und Trockenprozessen flüssige Filmbildner aufgebracht oder bereits fertige flächige Beschichtungsmaterialien aufgeklebt. Sie alle haben durchweg den Nachteil, der praktischen Dauerbeanspruchung nicht in dem zu fordernden Umfang gewachsen zu sein. So ist zum Beispiel bei durch Verklebung aufgebrachten Blechen, Schichtstoffplatten oder Folien, begünstigt durch Klima-, Temperatur- und Dimensionsschwankungen oft bereits schon nach kurzer Zeit Ablösen infolge Klebstoffermüdung oder -abwanderung zu beobachten, während die flüssig aufgebrachten Anstriche zu Versprödung und Bildung von Rissen neigen, durch die Feuchtigkeit eindringt, die Beschichtung unterwandert und ablöst. Selbst wenn sie die eigentliche Werkstoffsubstanz nicht angreift oder zerstört, ist dadurch die Verläßlichkeit der Schutzfunktion nicht mehr gewährleistet. Hinzu kommt, daß der Alkaligehalt anorganischer Bindemittel generell eine haftungsfeindliche Wirkung hat, sofern diese nicht durch spezielle Haftgründe und Sperrschichten bzw. sehr teure Klebstoffe oder Anstrichsysteme neutralisiert und eliminiert werden kann.

Diese Applikationsschwierigkeiten bestehen für Elastomere in ganz besonderem Maße, da bis heute kein Verfahren bekannt ist, das eine unter Bewitterungsbeanspruchung dauerhaft sichere Verbindung von ausvulkanisierten Kautschuken bzw. Elastomeren insbesondere mit im allgemeinen alkalischen Mineralwerkstoffen durch kurzzeitige industrielle Fertigungsprozesse in vertretbarem Kostenrahmen erlaubt. Gerade diese elastomere Materialgruppe aber ist aufgrund ihrer Witterungs- und Farbstabilität, Dauerelastizität und der Möglichkeit, sie in physikalisch und mechanisch wirksamer Schichtdicke einzusetzen, für die Außenbeschichtung von Baustoffen in hervorragender und anderen Stoffgruppen signifikant überlegener Weise geeignet.

Ähnliche Schwierigkeiten ergeben sich, wenn bereits fertiggestellte rohe Platten oder Formkörper aus Holzfaser-, Holzspan- oder anderen Werkstoffen organischen Ursprungs nachträglich noch mit fest haftenden Deckschichten aus Polymermaterial ausgerüstet werden sollen, wenn eine Direktbeschichtung gemäß EP-A-0 009 053 nicht angewendet werden kann oder angewandt worden ist.

Aufgabe der Erfindung ist es, die industrielle Oberflächenvergütung von vorgefertigten Werkstoffen aus mineralischen und/oder nichtmineralischen Substanzen, insbesondere von Mineralwerkstoffen, mit Beschichtungsmaterialien aus der Gruppe der Elastomere zu ermöglichen, die

(1) gegenüber flüssig aufzubringenden Beschichtungen eine langfristigere schadensfreie Schutzwirkung haben, sowie einfacher und billiger appliziert werden können,

(2) gegenüber allen bisherigen flächigen Beschichtungsmaterialien sicherer und dauerhafter mit dem Trägerwerkstoff verbunden werden können, und

(3) hierdurch, und infolge der dauerelastischen Materialeigenschaften die Brüchigkeit des Trägerwerkstoffes so weit herabsetzen, daß dessen Materialstärke, Materialgewicht und damit seine Einsatzkosten erheblich reduziert werden können.

Diese Aufgabe wird erfindungsgemäß gelöst durch ein Verfahren zur Elastomerbeschichtung von vorgefertigten Werkstoffen aus mineralischen und/oder nichtmineralischen Substanzen, Zusätzen sowie gegebenenfalls Zuschlagstoffen und/oder Armierungen, umfassend das nachträgliche Beschichten einer porösen Oberfläche des aus einer oder mehrerer dieser Komponenten gebildeten, bereits fertiggestellten Werkstoffs als Trägermaterial mit einer bahnförmigen Deckschicht aus vulkanisierbarem Elastomermaterial in unvulkanisiertem Zustand; sowie im wesentlichen mechanisches Verankern der Deckschicht auf der porösen Oberfläche durch Vulkanisation des Elastomermaterials bei Drücken zwischen 50 und 500 N/cm² und bei Temperaturen zwischen 120°C und 300°C in einer Heißpresse, so daß das Elastomermaterial durch Wärmeeinwirkung zunächst in einen Zustand niedriger Viskosität übergeht und durch den gleichzeitigen Druck in die Poren der Oberfläche des Trägermaterials gepreßt wird, während des weiteren Vulkanisationsprozesses wieder erhärtet und dabei fest in dem Werkstoff verankert wird.

Außerdem wird mit der Erfindung ein Werkstoff aus mineralischen und/oder nichtmineralischen Substanzen, Zusätzen sowie gegebenenfalls Zuschlagstoffen und/oder Armierungen zur Verfügung gestellt, der sich dadurch auszeichnet, daß er auf einer oder mehreren Oberflächen mit wenigstens einer Deckschicht aus Elastomer versehen ist, die mittels des vorstehend angegebenen erfindungsgemäßen Verfahrens fest haftend aufgebracht ist.

Diese Beschichtungstechnik geht davon aus, daß das zum Beispiel folienförmig aufgelegte elastomere Beschichtungsmaterial nach dem Einfahren in die Heißpresse durch Wärmeeinwirkung zunächst in einen Zustand niedriger Viskosität übergeht und durch den gleichzeitigen Druck in die Poren des Trägermaterials gepreßt wird, sodann während des weiteren Vulkanisationsprozesses wieder erhärtet und sich dabei fest in dem Werkstoff verankert.

Sollte die normale Konsistenz des Trägermaterials sehr dicht und seine Porosität für ausreichend stabile mechanische Bindung zu gering sein, kann dieser Haftungseffekt durch auf die Materialoberfläche beschränkte künstliche Porenbildung verstärkt werden. Zu diesem Zweck müssen erfindungsgemäß vor dem Abbinden des Trägerwerkstoffes sogenannte Luftporenbildner entweder auf dessen eigene Außenfläche(n) oder auf die Innenseiten des formgebenden Werkzeuges aufgesprüht oder gestreut werden, so daß ihre Blähwirkung lediglich im Bereich der Oberflächen zu vermehrter Porosität führt. Ein ähnliches Ergebnis läßt sich durch Einbetten von Materialpartikeln (zum Beispiel vorgeschäumte Polystyrolkügelchen) in die Oberfläche(n) erzielen, die, entsprechende Hohräume hinterlassend, anschließend wieder herausgelöst bzw. während der Heißpressung ausgegast oder ausgeschmolzen werden. Sie können aber auch als haftvermittelnde Substanzen benutzt werden.

Die so erzielbare Haftfestigkeit kann noch weiter gesteigert werden, indem diese zunächst rein mechanische Verbindung mit einer chemischen gekoppelt wird, was dadurch geschieht, daß die elastomere Deckschicht als solche während der Heißpressung durch Vernetzung und/oder Verschmelzung und/oder Verklebung mit Zusätzen und/oder Zuschlagstoffen und/oder Armierungen des Trägermaterials verbunden wird, wenn die in der Trägersubstanz enthaltenen Zusätze, Zuschlagstoffe oder Armierungen gänzlich oder teilweise aus elastomeren und/oder thermoplastischen bzw. anderen vernetzbaren Materialien bestehen (zum Beispiel Latex, Fasern, Vliese, Gewebe oder Granulat aus Kautschuk, Thermoplasten usw.). Auf diese Weise kann eine die Beschichtung auch in tieferen Bereichen des Trägermaterials verankernde vulkanisierende Vernetzung und/oder thermoplastische Verschweißung bzw. Verschmelzung die mechanische Haftung verstärken und unterstützen.

Das auf diesem Wege entstandene Produkt ist nun mit einer quasi unlösbar haftenden elastomeren Deckschicht versehen, die aus u.U. mehreren Einzelschichten unterschiedlicher Zusammensetzung und/oder Konsistenz aufgebaut sein und ihrerseits eventuell wiederum ganz oder partiell durch Aufvulkanisieren, Aufschweißen oder Aufkleben weitere Deckschichten zum Beispiel aus Kautschuk, Folien, Blechen usw. erhalten kann. Sofern dies nicht schon im ersten Beschichtungsprozeß geschehen ist, können jetzt auch beispielsweise elektrische Heizleitungen oder Gewebe- bzw. Faserarmierungen eingebettet werden. Weiterhin läßt sich ein mehrschichtiger Beschichtungsaufbau auch so vornehmen, daß zum Beispiel die auf das Trägermaterial aufgelegte Elastomerfolie dupliert ist und aus einer äußeren, u.U. bereits an- oder ausvulkanisierten Schicht sowie einer dem Trägermaterial zugekehrten unvulkanisierten Schicht niedrigerer Härte besteht, die in die Trägersubstanz eindringen und die Verankerung übernehmen kann.

In weiterer Ausgestaltung der Erfindung besteht schließlich die Möglichkeit, der elastomeren Deckschicht eines ebenen Trägerwerkstoffes beim Beschichtungsprozeß, beispielsweise durch Benutzung strukturierter Trennpapiere, Preßbleche oder Werkzeuge nachträglich plastische Oberflächengestaltungen aufzuformen oder zum Beispiel durch bereits eingearbeitete oder aufgestreute Substanzen dekorative und farbige Effekte zu erzeugen.

In der praktischen Anwendung ist eine Vielzahl von Materialkombinationen beschichtbar. Wichtig ist vor allem der Erfindungsgedanke, Materialien, die mineralische, anorganische Bindemittel enthalten, in einem nachfolgenden Heißpreßprozeß mit dabei ausvulkanisierenden elastomeren Deckschichten auszurüsten, die sich gleichzeitig durch mechanische Verankerung sowie gegebenenfalls durch Vernetzung und eventuelle thermoplastische Reaktionen mit dem Trägermaterial verbinden.

So sind mit dem erfindungsgemäßen Verfahren auch nichtmineralische Trägermaterialien beschichtbar, so daß damit Werkstoffe, die ganz oder vorwiegend aus nichtmineralischen Substanzen (zum Beispiel Pflanzenfasern oder -späne, Kunststoffasern oder -partikel usw.) sowie Zusätzen und gegebenenfalls Zuschlagstoffen und/oder Armierungen bestehen, mit witterungsbeständigen, abrieb-, schlag- und stoßfesten sowie dekorativen Oberflächenbeschichtungen ausgerüstet werden können, indem Deckschichten aus besonders widerstandsfähigen Natur- und/oder Synthesekautschuken oder anderen elastomeren Stoffen in noch unvulkanisiertem Zustand aufgebracht und dann mittels des Verfahrens nach der Erfindung mit dem Trägermaterial verbunden werden.

Als weitere Ausgestaltung der Erfindung wird vorgeschlagen, zwischen die elastomere(n) Deckschicht(en) und das Trägermaterial oder in den Deckschichtverbund, wenn dieser aus mehreren Einzelschichten von gegebenenfalls unterschiedlicher Materialzusammensetzung und/oder -konsistenz und/oder -funktion besteht, Solarzellen sowie eventuelle dazugehörige Funktionsteile einzubetten. Die über ihnen angeordnete(n) Deckschicht(en) muß in diesem Falle aus elastomeren sowie bedarfsweise weiteren Substanzen bestehen, die, gegebenenfalls besonders wirksame Spektralbereiche bevorzugend, lichtdurchlässig sind. Die elastomere(n) Deckschicht(en) können auch selbst als Funktionsbestandteile von Solarzellen ausgebildet sein.

Mit dieser technischen Lösung können Solarzellen als das Sonnenlichtdirekt in elektrische Energie umwandelnde Kollektoranordnungen einfach und billig in zum Beispiel zur Dacheindeckung geeignete Verbundwerkstoffe integriert und durch deren witterungsbeständige elastomere Außenbeschichtung fixiert und geschützt werden.

Die Erfindung wird nachstehend anhand einiger besonders bevorzugter Ausführungsbeispiele, die in den Figuren 1 bis 7 der Zeichnung dargestellt sind, näher erläutert; es zeigen:

Figuren 1 bis 4 Schnittansichten durch vier verschiedene Ausführungsformen des erfindungsgemäßen Werkstoffs;

Figur 5 eine Ausführungsform des Aufbringens einer elastomeren Deckschicht bei dem Verfahren nach der Erfindung, und zwar in Schnittansicht;

Figur 6 eine Veranschaulichung einer Ausführungsform des erfindungsgemäßen Verfahrens; und

Figur 7 eine perspektivische Darstellung einer Ausführungsform des Werkstoffs nach der Erfindung, wobei aus Darstellungsgründen ein Teil der elastomeren Deckschicht abgeschnitten und ein Teil von der Oberfläche des Trägermaterials abgehoben ist.

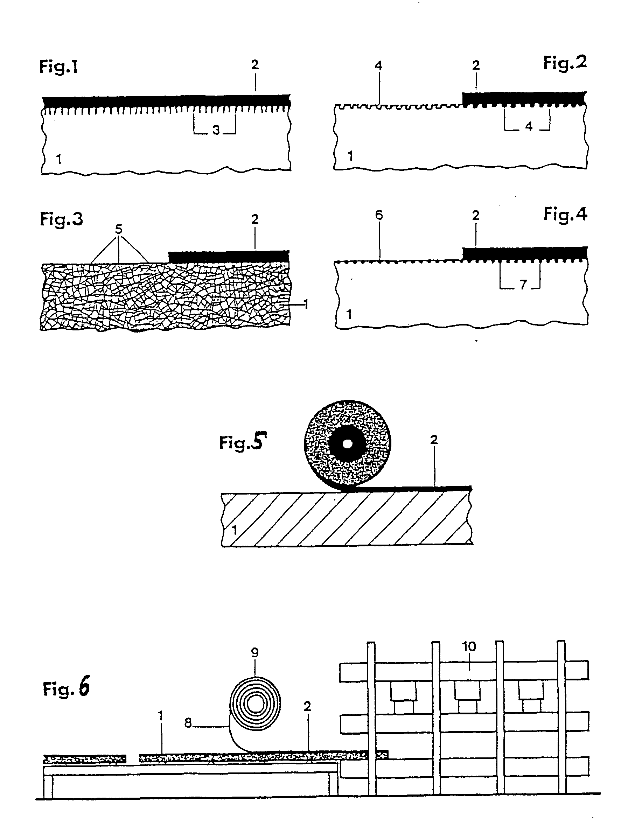

Es sei zunächst auf Figur 1 Bezug genommen, die eine vergrößerte Darstellung eines Mineralwerkstoff-Schnittes 1 zeigt, wonach eine elastomere Deckschicht 2 während der Heißvulkanisation in die Werkstoffporen gepreßt und in ihnen verankert wurde, letzteres ist bei 3 veranschaulicht.

Bei der Ausführungsform nach Figur 2 wurde der Mineralwerkstoff 1 bei der Herstellung nur auf der Oberfläche vermehrt porös ausgebildet. In diese zusätzlichen und größeren Poren 4 wurde während der Heißvulkanisation eine elastomere Deckschicht 2 hineingepreßt und in ihnen verankert.

Bei dem Mineralwerkstoff 1 nach Figur 3 ist dieser mit Zusätzen bzw. Zuschlagstoffen 5 durchsetzt, mit denen die elastomere Deckschicht 2 während der Heißvulkanisation durch Vernetzung und/oder Verschmelzung und/oder Verklebung mit einem Bestandteil des Trägermaterials eine Verbindung eingeht.

Gemäß Figur 4 sind in die Oberfläche des Mineralwerkstoffes 1 vor dessen Aushärtung Partikel von Substanzen 6 eingebettet worden, mit denen die elastomere Deckschicht 2 während der Heißvulkanisation durch Vernetzung und/oder Verschmelzung und/oder Verklebung verbunden wird.

Nach Figur 5 erfolgt das Aufbringen der elastomeren Deckschicht 2 auf den Mineralwerkstoff 1 durch Aufwalzen.

Die Figur 6 zeigt eine Prinzipdarstellung des Beschichtungsprozesses. Der plattenförmige Mineralwerkstoff 1 wird mit der elastomeren Deckschicht 2 hier in Form einer von der Rolle 9 abgewickelten unvulkanisierten Folie 8 belegt. Anschließend erfolgt in der Heißpresse 10 die Verbindung von Träger- und Beschichtungsmaterial während und durch dessen Vulkanisation.

Selbstverständlich können alle hier dargestellten Methoden der Werkstoffverbindung und des Materialauftrages wahlweise miteinander kombiniert zur Anwendung gelangen.

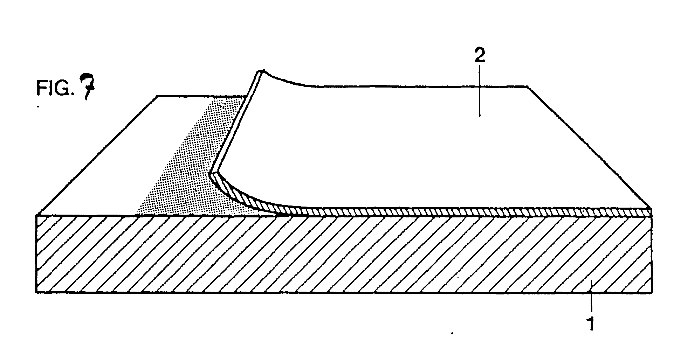

Gemäß der perspektivischen Schnittansicht der Figur 7 ist dem plattenförmigen Trägermaterial 1 in einem Heißpreßprozeß eine elastomere Deckschicht 2 aufvulkanisiert worden.

Kurz zusammengefaßt wird mit der Erfindung ein Verfahren zur Verfügung gestellt, mit dessen Hilfe Werkstoffe, die aus mineralischen Substanzen (zum Beispiel Zement bzw. Beton, Gips, Ton usw.) sowie Zusätzen und gegebenenfalls Zuschlagstoffen und/oder Armierungen bestehen, mit abrieb-, schlag-, stoß- und rißfesten sowie dekorativen Oberflächenbeschichtungen ausgerüstet werden können, indem Deckschichten aus Kautschuk oder anderen elastomeren Stoffen in noch unvulkanisiertem Zustand aufgebracht und dann in einem zusätzlichen Heißpreßprozeß durch Heißvulkanisation fest mit dem Trägermaterial verbunden werden. Hierbei kann die mechanische Verankerung der Beschichtung durch auf die Oberfläche des Trägermaterials beschränkte vermehrte Porosität verstärkt und/oder dadurch ergänzt werden, daß die elastomere(n) Deckschicht(en) während der Heißpressung mit den Zusätzen, Zuschlagstoffen oder Armierungen zugleich durch Vernetzung, Verschmelzung oder Verklebung zusätzliche Verbindungen eingehen.

Mittels des erfindungsgemäßen Verfahrens können auch in gleicher Weise nichtmineralische Substanzen (zum Beispiel Pflanzenfasern oder -späne, Kunststoffasern oder -partikel usw.) mit Zusätzen und gegebenenfalls Zuschlagstoffen zu einem nichtmineralischen Werkstoff nach der Erfindung verarbeitet werden, oder auch Gemische aus mineralischen und nichtmineralischen Substanzen.

Darüberhinaus ist die Einbettung von Solarzellen und eventuell dazugehörigen Funktionsteilen in oder durch eine oder mehrere außenseitig lichtdurchlässige elastomere Deckschichten vorgesehen, die ihrerseits auch selbst Funktionsteile von Solarzellen sein können.

**Patentansprüche**

1. Verfahren zur Elastomerbeschichtung von vorgefertigten Werkstoffen aus mineralischen und/oder nichtmineralischen Substanzen, Zusätzen sowie gegebenenfalls Zuschlagstoffen und/oder Armierungen, umfassend das nachträgliche Beschichten einer porösen Oberfläche des aus einer oder mehrerer dieser Komponenten gebildeten bereits fertiggestellten Werkstoffs als Trägermaterial (1) mit einer bahnförmigen Deckschicht (2) aus vulkanisierbarem Elastomermaterial in unvulkanisiertem Zustand; sowie im wesentlichen mechanisches Verankern der Deckschicht (2) auf der porösen Oberfläche durch Vulkanisation des Elastomermaterials bei Drücken zwischen 50 und 500 N/cm² und bei Temperaturen zwischen 120°C und 300°C in einer Heißpresse (10), so daß das Elastomermaterial durch Wärmeeinwirkung zunächst in einen Zustand niedriger Viskosität übergeht und durch den gleichzeitigen Druck in die Poren (3) der Oberfläche des Trägermaterials (1) gepreßt wird, während des weiteren Vulkanisationsprozesses wieder erhärtet und dabei fest in dem Werkstoff verankert wird.

2. Verfahren nach Anspruch 1, dadurch gekennzeichnet, daß die zu beschichtende Oberfläche des Trägermaterials (1) gegenüber dem übrigen Trägermaterial (1) vermehrt porös ausgebildet wird.

3. Verfahren nach Anspruch 1 und 2, dadurch gekennzeichnet, daß die zu beschichtende Oberfläche des Trägermaterials (1) durch nur auf die Oberfläche einwirkende Luftporenbildner gegenüber dem übrigen Trägermaterial (1) vermehrt porös ausgebildet wird.

4. Verfahren nach Anspruch 1 bis 3, dadurch gekennzeichnet, daß die zu beschichtende Oberfläche des Trägermaterials (1) durch zunächst in die Oberflächen eingebettete, vor oder während der Elastomerbeschichtung jedoch wieder herausgelöste Partikel gegenüber dem übrigen Trägermaterial (1) vermehrt porös ausgebildet wird.

5. Verfahren nach einem der Ansprüche 1 bis 4, dadurch gekennzeichnet, daß als bahnförmige Deckschicht (2) eine Elastomerfolie verwendet wird.

6. Verfahren nach einem der Ansprüche 1 bis 5, dadurch gekennzeichnet, daß die elastomere Deckschicht (2) aus mehreren Einzelschichten von gegebenenfalls unterschiedlicher Zusammensetzung und/oder Konsistenz gebildet wird.

7. Verfahren nach einem der Ansprüche 1 bis 6, dadurch gekennzeichnet, daß das Trägermaterial (1) ganz oder vorwiegend aus nichtmineralischen Substanzen, Zusätzen sowie gegebenenfalls Zuschlagstoffen und/oder Armierungen besteht.

8. Verfahren nach einem der Ansprüche 1 bis 6, dadurch gekennzeichnet, daß das Trägermaterial (1) ganz oder vorwiegend aus mineralischen Substanzen, Zusätzen sowie gegebenenfalls Zuschlagstoffen und/oder Armierungen besteht.

9. Verfahren nach einem der Ansprüche 1 bis 8, dadurch gekennzeichnet, daß die elastomere Deckschicht (2) als solche während der Heißpressung durch Vernetzung und/oder Verschmelzung und/oder Verklebung mit Zusätzen und/oder Zuschlagstoffen und/oder Armierungen des Trägermaterials (1) verbunden wird.

10. Verfahren nach einem der Ansprüche 1 bis 9, dadurch gekennzeichnet, daß die Deckschicht (2) aus unvulkanisiertem Natur- und/oder Synthesekautschuk oder mehreren anderen elastomeren Stoffen besteht.

11. Werkstoff aus mineralischen und/oder nichtmineralischen Substanzen, Zusätzen sowie gegebenenfalls Zuschlagstoffen und/oder Armierungen, dadurch gekennzeichnet, daß er auf einer oder mehreren Oberflächen mit wenigstens einer Deckschicht (2) aus Elastomer versehen ist, die mittels eines Verfahrens nach einem der Ansprüche 1 bis 10 fest haftend aufgebracht ist.

12. Werkstoff nach Anspruch 11, dadurch gekennzeichnet, daß die elastomere(n) Deckschicht(en) (2) aus mehreren Einzelschichten von gegebenenfalls unterschiedlicher Zusammensetzung und/oder Konsistenz besteht bzw. bestehen.

13. Werkstoff nach Anspruch 11 oder 12, dadurch gekennzeichnet, daß in die elastomere(n) Deckschicht(en) (2) Leitungsdrähte bzw. Armierungen zum Beispiel in Form von Geweben, Vliesen, Geflechten o.dgl. eingebettet sind.

14. Werkstoff nach einem der Ansprüche 11 bis 13 dadurch gekennzeichnet, daß die elastomere(n) Deckschicht(en) (2) ganz oder teilweise mit zusätzlichen Belägen versehen ist bzw. sind.

## Revendications

1. Procédé pour le revêtement, au moyen d'un élastomère, de matériaux préfabriqués formés de substances, d'additifs ainsi qu'éventuellement d'agrégats et/ou d'armatures, minéraux et/ou non minéraux, y compris le revêtement subséquent d'une surface poreuse du matériau formé d'un ou plusieurs de ces composants, déjà fabriqué en tant que matériau de support (1) par une couche de revêtement (2) en forme de bande réalisée en un matériau élastomère vulcanisable, à l'état non vulcanisé; ainsi que pour l'ancrage essentiellement mécanique de la couche de revêtement (2) sur la surface poreuse par vulcanisation du matériau élastomère sous des pressions comprises entre 50 et 500 N/cm² et à des températures comprises entre 120°C et 300°C dans une presse à chaud (10) de manière que le matériau élastomère passe tout d'abord, sous l'action de la chaleur, à un état de faible viscosité et soit refoulé à force, sous l'effet de la pression appliquée simultanément, dans les pores (3) de la surface du matériau de support (1), durcisse à nouveau pendant la suite du processus de vulcanisation et soit alors ancré fermement dans le matériau.

2. Procédé selon la revendication 1, caractérisé en ce qu'on rend la surface du matériau de support (1) qui doit être pourvue d'un revêtement, plus poreuse que le reste du matériau de support (1).

3. Procédé selon les revendications 1 et 2, caractérisé en ce qu'on rend la surface du matériau de support (1), qui doit être pourvue d'un revêtement, plus poreuse par rapport au reste du matériau de support (1), au moyen d'agents de formation de pores remplis d'air, agissant uniquement sur la surface.

4. Procédé selon les revendications 1 à 3, caractérisé en ce qu'on rend la surface du matériau de support (1) qui doit être pourvue d'un revêtement, plus poreuse que le reste du matériau de support (1), à l'aide de particules tout d'abord insérées dans la surface, mais toutefois éliminées à nouveau par dissolution avant ou pendant le revêtement par l'élastomère.

5. Procédé selon l'une des revendications 1 à 4, caractérisé en ce qu'on utilise une feuille d'élastomère comme couche de revêtement (2) en forme de bande.

6. Procédé selon l'une des revendications 1 à 5, caractérisé en ce que la couche de revêtement (2) en élastomère est formée de plusieurs couches individuelles de compositions et/ou de consistances éventuellement différentes.

7. Procédé selon l'une des revendications 1 à 6, caractérisé en ce que le matériau de support (1) est constitué, en totalité ou de façon prépondérante, par des substances, des additifs ainsi qu'éventuellement des agrégats et/ou des armatures, non minéraux.

8. Procédé selon l'une des revendications 1 à 6, caractérisé en ce que le matériau de support (1) est constitué, en totalité ou de façon prépondérante, par des substances, des additifs ainsi qu'éventuellement des agrégats et/ou des armatures, minéraux.

9. Procédé selon l'une des revendications 1 à 8, caractérisé en ce que la couche de revêtement (2) en élastomère est liée en tant que telle, pendant le pressage à chaud, par réticulation et/ou fusion et/ou collage à des additifs et/ou des agrégats et/ou des armatures du matériau de support (1).

10. Procédé selon l'une des revendications 1 à 9, caractérisé en ce que la couche de revêtement (2) est constituée par du caoutchouc naturel et/ou synthétique non vulcanisé ou par plusieurs autres substances élastomères.

11. Matériau formé par des substances, des additifs ainsi qu'éventuellement des agrégats et/ou des armatures, minéraux et/ou non minéraux, caractérisé en ce qu'il est revêtu, sur une ou plusieurs surfaces, d'au moins une couche de revêtement (2) en élastomère, qui est déposée de manière à adhérer fermement à l'aide d'un procédé selon l'une des revendications 1 à 10.

12. Matériau selon la revendication 11, caractérisé en ce que la ou les couches de revêtement (2) en élastomère est ou sont constituée(s) par plusieurs couches individuelles possédant des compositions et/ou des consistances éventuellement différentes.

13. Matériau selon la revendication 11 ou 12, caractérisé en ce que des fils conducteurs ou des armatures se présentant par exemple sous la forme de tissus, de nappes non tissées, de treillis ou analogues sont noyés dans la ou les couches de revêtement (2) en élastomère.

14. Matériau selon l'une des revendications 11 à 13, caractérisé en ce que la ou les couches de revêtement (2) en élastomère sont pourvues, en totalité ou en partie, de revêtements supplémentaires.

## Claims

1. A process whereby materials prefabricated from mineral and/or non-mineral substances, additives or, if required, aggregates and/or reinforcements are coated with elastomer, the material already manufactured from one or more of the aforementioned components serving as a substrate (1) and having a porous surface which is subsequently coated with a covering layer (2) in the form of a web of vulcanizable elastomeric material in the non-vulcanized state, the cover layer (2) being anchored to the porous surface by substantially mechanical means by vulcanizing the elastomeric material at pressures between 50 and 500 N/cm² and at temperatures between 120°C and 300°C in a heating press (10), so that the elastomeric material is converted by heat to a state of low viscosity and simultaneously pressed into the pores (3) in the surface of the substrate (1), and is re-hardened during the subsequent vulcanization process and firmly anchored in the material.

2. A process according to claim 1, characterised in that the surface of the substrate (1) to be coated is made more porous than the rest of the substrate (1).

3. A process according to claims 1 and 2, characterised in that the surface of the substrate (1) to be coated is made more porous than the rest of the substrate (1) by air entrainers which act on the surface only.

4. A process according to claims 1 to 3, characterised in that the surface of the substrate (1) to be coated is made more porous than the rest of the substrate (1) by particles which are first embedded in the surfaces and then released before or during the coating with elastomer.

5. A process according to any of claims 1 to 4, characterised in that the cover layer (2) in the form of a web is an elastomer foil.

6. A process according to any of claims 1 to 5, characterised in that the elastomeric cover layer (2) is formed from a number of individual layers which differ in composition and/or consistency if required.

7. A process according to any of claims 1 to 6, characterised in that the substrate (1) consists mainly or completely of non-mineral substances, additives and, if required, aggregates and/or reinforcements.

8. A process according to any of claims 1 to 6, characterised in that the substrate (1) consists mainly or comepletely of mineral substances, additives and, if required, aggregates and/or reinforcements.

9. A process according to any of claims 1 to 8, characterised in that the elastomeric cover layer (2) as such is bonded during the hot-pressing operation by crosslinking and/or melting and/or sticking to additives and/or aggregates and/or reinforcements of the substrate (1).

10. A process according to any of claims 1 to 9, characterised in that the cover layer (2) is made of non-vulcanized natural and/or synthetic rubber or a number of other elastomers.

11. A material comprising mineral and/or non-mineral substances, additives and, if required, aggregates and/or reinforcements, characterised in that one or more surfaces thereof is covered with at least one layer (2) of elastomer which is applied and firmly stuck by a process according to any of claims 1 to 10.

12. A material according to claim 11, characterised in that the elastomeric cover layer or layers (2) comprise a number of individual layers which if required differ in composition and/or consistency.

13. A material according to claim 11 or 12, characterised in that conducting wires or reinforcements, e.g. in the form of woven fabric, mats, meshes or the like, are embedded in the elastomeric cover layer or layers (2).

14. A material according to any of claims 11 to 13, characterised in that the elastomeric cover layer or layers (2) are partly or completely provided with additional coatings.

Fig.1

Fig.2

Fig.3

Fig.4

Fig.5

Fig.6

1

FIG. 7

2

1